# DEMANDE DE BREVET EUROPEEN

(11) **EP 3 699 475 A1**
(43) Date de publication de la demande: **26.08.2020**
(21) Numéro de dépôt: 20157691.5
(22) Date de dépôt: 17.02.2020
(51) Int. Cl.: F17C 3/02, F17C 13/12

(54) **CUVE ÉTANCHE ET THERMIQUEMENT ISOLANTE**

(30) Priorité: 21.02.2019 FR 1901781
(71) Demandeur: Gaztransport et Technigaz, 78470 Saint Rémy les Chevreuse (FR)
(72) Inventeur: DURAND, François Michel, 78470 SAINT REMY LES CHEVREUSE (FR); DELANOE, Sébastien, 78470 SAINT REMY LES CHEVREUSE (FR); LE ROUX, Guillaume, 78470 SAINT REMY LES CHEVREUSE (FR); BERGER, Vincent, 78470 SAINT REMY LES CHEVREUSE (FR); BUGNICOURT, Bertrand, 78470 SAINT REMY LES CHEVREUSE (FR)
(74) Mandataire: Loyer & Abello

(57) **Abrégé**

L'invention concerne une cuve étanche et thermiquement isolante de stockage d'un gaz liquéfié à basse température, comportant un caisson isolant (11) comprenant un panneau de fond (17) prenant appui sur une paroi porteuse, par l'intermédiaire de boudins de mastic (60, 61) disposés entre la paroi porteuse et le panneau de fond (17), les boudins de mastic (60, 61) étant disposés sous la forme d'au moins un contour fermé délimitant au moins un espace confiné entre la paroi porteuse et le panneau de fond (17), le panneau de fond (17) comportant au moins un passage traversant (51) débouchant dans l'espace confiné pour permettre la circulation de gaz entre l'espace confiné et un espace interne du caisson isolant (11).

## Description

### Domaine technique

L'invention se rapporte au domaine des cuves étanches et thermiquement isolantes, à membranes. En particulier, l'invention se rapporte au domaine des cuves étanches et thermiquement isolantes pour le stockage et/ou le transport de liquide à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) à environ -162°C à pression atmosphérique. Ces cuves peuvent être installées à terre ou sur un ouvrage flottant. Dans le cas d'un ouvrage flottant, la cuve peut être destinée au transport de gaz liquéfié ou à recevoir du gaz liquéfié servant de carburant pour la propulsion de l'ouvrage flottant.

### Arrière-plan technologique

Dans la demande de brevet WO17064426 A1, une cuve étanche et thermiquement isolante intégrée dans une structure porteuse est décrite. La cuve comprend une barrière thermiquement isolante et une membrane étanche portée par la barrière thermiquement isolante. La barrière thermiquement isolante comporte une pluralité de caissons isolants. Chaque caisson isolant comporte un panneau de fond, des parois latérales, un panneau de couvercle, et une matière isolante entourée par les panneaux et les parois latérales. Les panneaux de fond des caissons isolants reposent sur les parois de la structure par l'intermédiaire de boudins de mastic afin de rattraper les écarts des parois par rapport à une surface de référence plane et assurer un portage suffisamment uniforme des caissons isolants. Les boudins de mastic comportent des boudins longitudinaux parallèles et deux boudins transversaux longeant les extrémités des boudins parallèles.

Pour des raisons de sécurité, la barrière thermiquement isolante doit être entièrement placée sous atmosphère inerte en faisant circuler un gaz inerte. Ainsi le gaz inerte peut circuler à travers les caissons du fait que les parois latérales des caissons isolants comportent des ouvertures. Par ailleurs, pour assurer un portage suffisant du panneau de fond d'un caisson isolant notamment pour résister aux efforts de pression statique et dynamiques, il peut être nécessaire de disposer des boudins de mastic sur la totalité ou la quasi-totalité de la longueur et/ou la largeur du panneau de fond. De ce fait, et d'autant plus que les cordons de mastic sont écrasés lors de la pose des caissons isolants sur les parois de la structure porteuse, les boudins de mastic longitudinaux et transversaux sont susceptibles de se rejoindre et de former ainsi des contours fermés délimitant des espaces confinés entre le panneau de fond et la paroi porteuse.

### Résumé

Une idée à la base de l'invention est de fournir une cuve étanche et thermiquement isolante dans laquelle de tels espaces confinés ne soient pas complètement séparés du restant de la barrière thermiquement isolante. Ainsi un but de l'invention est d'éviter que des espaces confinés ne soient pas privés d'un courant de gaz inerte.

A cet effet, la présente invention a pour objet une cuve étanche et thermiquement isolante de stockage d'un gaz liquéfié à basse température, intégrée dans une structure porteuse, ladite cuve comportant une paroi de cuve fixée sur une paroi porteuse de la structure porteuse, la paroi de cuve comportant dans le sens de l'épaisseur, de l'extérieur vers l'intérieur de la cuve :
une barrière thermiquement isolante retenue sur la paroi porteuse, et une membrane étanche supportée par la barrière thermiquement isolant,
la barrière thermiquement isolante comportant une pluralité de caissons isolants juxtaposés, un dit ou au moins un caisson isolant comprend, ou plusieurs des ou certains des ou chacun des caissons isolants comprennent, un panneau de couvercle formant une surface de support pour la membrane étanche, des panneaux de côté et un panneau de fond prenant appui sur la paroi porteuse,
le panneau de fond et le panneau de couvercle se développant parallèlement l'un de l'autre et parallèlement à la paroi porteuse, les panneaux de côté reliant le panneau de fond au panneau de couvercle de manière à délimiter un espace interne du caisson isolant, l'espace interne étant rempli d'une garniture calorifuge perméable aux gaz, des orifices traversants étant prévus dans les panneaux de côté pour permettre la circulation de gaz entre l'espace interne du caisson isolant et un environnement du caisson isolant, dans laquelle le panneau de fond prend appui sur le paroi porteuse, par l'intermédiaire de boudins de mastic disposés entre la paroi porteuse et le panneau de fond pour rattraper des écarts de la paroi porteuse par rapport à une référence plane, les boudins de mastic étant disposés sous la forme d'au moins un contour fermé délimitant au moins un espace confiné entre la paroi porteuse et le panneau de fond,
le panneau de fond comportant au moins un passage traversant débouchant dans ledit ou chaque au moins un espace confiné pour permettre la circulation de gaz entre ledit ou chaque au moins un espace confiné et l'espace interne du caisson isolant.

On entend par « gaz liquéfié à basse température » tout corps qui est à l'état de vapeur dans les conditions normales de pression et de température et qui a été placé dans l'état liquide par abaissement de sa température.

Selon un mode de réalisation, l'invention fournit aussi un caisson isolant pour une cuve étanche et thermiquement isolante de stockage d'un gaz liquéfié à basse température, comprenant un panneau de couvercle, des panneaux de côté et un panneau de fond,
le panneau de fond et le panneau de couvercle se développant parallèlement l'un de l'autre, les panneaux de côté reliant le panneau de fond au panneau de couvercle de manière à délimiter un espace interne du caisson isolant, l'espace interne étant rempli d'une garniture calorifuge perméable aux gaz,
des orifices traversants étant prévus dans les panneaux de côté pour permettre la circulation d'un gaz dans le caisson isolant,
dans lequel des boudins de mastic sont disposés sur une face externe du panneau de fond,
les boudins de mastic étant agencés sous la forme d'au moins un contour fermé délimitant au moins une zone fermée sur la face externe, le panneau de fond comportant au moins un passage traversant reliant une première face interne à la face externe, et débouchant dans ladite ou chaque au moins une zone fermée.

En outre, la cuve et le caisson peuvent posséder une ou plusieurs caractéristiques suivantes, considérées isolément ou en combinaison.

Un tel caisson peut présenter différentes géométries. Selon un mode de réalisation, le caisson présente une forme générale de parallélépipède rectangle.

Selon un mode de réalisation, les panneaux de côté comportent des panneaux de côté transversal et des panneaux de côté longitudinal, les panneaux de côté transversal se développant perpendiculairement aux panneaux de côté longitudinal, les panneaux de côté transversal comportant les orifices traversants.

Selon un mode de réalisation, les boudins de mastic comprennent des boudins transversaux et des boudins longitudinaux, les boudins transversaux étant disposés au droit des panneaux de côté transversal, et les boudins longitudinaux étant disposés entre les boudins transversaux. Ainsi les boudins de mastic réalisent un meilleur portage du caisson isolant en limitant les efforts de flexion dans le panneau de fond au droit des panneaux de côté transversal.

Selon un mode de réalisation, des boudins longitudinaux sont disposées au droit des panneaux de côté longitudinal. Ainsi les boudins de mastic réalisent un meilleur portage du caisson isolant en limitant les efforts de flexion dans le panneau de fond au droit des panneaux de côté longitudinal.

Selon un mode de réalisation, le ou chaque caisson isolant comporte en outre des entretoises porteuses disposées dans l'espace interne pour diviser l'espace interne en une pluralité de compartiments, les entretoises porteuses se développant parallèlement aux panneaux de côté longitudinal, une entretoise porteuse étant placée entre deux orifices traversants consécutifs. Ainsi les boudins de mastic réalisent un meilleur portage du caisson isolant en limitant les efforts de flexion dans le panneau de fond au droit des entretoises porteuses.

Un tel passage traversant peut être réalisé de différentes manières.

Selon un mode de réalisation, des boudins longitudinaux sont disposés au droit des entretoises porteuses.

Selon un mode de réalisation, le au moins un passage traversant comporte une rainure traversant le ou chaque espace confiné, ou traversant la ou chaque zone fermée.

Selon un mode de réalisation, la rainure s'étend sur toute une largeur du panneau de fond, c'est-à-dire d'un bord à un autre bord du panneau de fond.

Selon un mode de réalisation, la rainure s'étend parallèlement aux panneaux de côté transversal et est disposée de manière à segmenter le panneau de fond en deux parties égales.

Selon un mode de réalisation, la rainure présente une largeur comprise entre 2 et 12 mm, de préférence entre 4 et 8 mm et idéalement de 5 mm.

Selon un mode de réalisation, le panneau de fond comprend une pluralité de passages traversants, présentant une forme de trous.

Selon un mode de réalisation, au moins un desdits trous débouche dans chaque espace confiné, ou débouche dans chaque zone fermée.

Selon un mode de réalisation, les ou au moins un desdits trous présentent un diamètre compris entre 15 et 30 mm et de préférence entre 25 et 30 mm.

Selon un mode de réalisation, la barrière thermiquement isolante est une barrière thermiquement isolante secondaire et la membrane étanche est une membrane étanche secondaire, et la paroi de cuve comportant en outre une barrière thermiquement isolante primaire disposée sur la membrane étanche secondaire et une membrane étanche primaire portée par ladite barrière thermiquement isolante primaire.

La garniture calorifuge perméable au gaz peut être réalisée de différentes manières. Selon un mode de réalisation, la garniture calorifuge comprend une garniture non structurelle.

Selon un mode de réalisation, la garniture non structurelle est choisie parmi la perlite, la laine de verre, la laine de roche, la mousse polymère à cellules ouvertes à basse densité, les silices pyrogénées, les aérogels, la ouate de cellulose, et leurs mélanges.

Dans le cas d'une garniture sous forme de poudre, des sachets en tissu perméable au gaz peuvent être employés pour empaqueter la garniture calorifuge ou des morceaux de tissu perméable au gaz peuvent être fixés dans le caisson au niveau des passages traversant du fond du caisson pour conserver l'isolant sous forme de poudre dans le caisson.

Une telle cuve peut faire partie d'une installation de stockage terrestre, par exemple pour stocker du GNL ou être installée dans une structure flottante, côtière ou en eau profonde, notamment un navire méthanier, une unité flottante de stockage et regazéification (FSRU), une unité flottante de production et de stockage déporté (FPSO) et autres. Une telle cuve peut aussi servir de réservoir de carburant dans tout type de navire.

Selon un mode de réalisation, un navire pour le transport d'un produit liquide froid comporte une double coque et une cuve précitée disposée dans la double coque.

Selon un mode de réalisation, l'invention fournit aussi un procédé de chargement ou déchargement d'un tel navire, dans lequel on achemine un produit liquide froid à travers des canalisations isolées depuis ou vers une installation de stockage flottante ou terrestre vers ou depuis la cuve du navire.

Selon un mode de réalisation, l'invention fournit aussi un système de transfert pour un produit liquide froid, le système comportant le navire précité, des canalisations isolées agencées de manière à relier la cuve installée dans la coque du navire à une installation de stockage flottante ou terrestre et une pompe pour entrainer un flux de produit liquide froid à travers les canalisations isolées depuis ou vers l'installation de stockage flottante ou terrestre vers ou depuis la cuve du navire.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La figure 1 est une vue schématique partielle d'une structure porteuse destinée à recevoir les parois d'une cuve étanche et thermiquement isolante.
[fig.2] La figure 2 est une vue écorchée en perspective paroi de cuve étanche et thermiquement isolante portée par une paroi porteuse de la figure 1.
[fig.3] La figure 3 est une vue partiellement éclatée de dessus d'un caisson isolant de la barrière thermiquement isolante selon un premier mode de réalisation, en perspective cavalière.
[fig.4] La figure 4 est une vue de dessous du caisson isolant de la figure 3, en perspective cavalière.
[fig.5] La figure 5 est une vue de dessous d'un caisson isolant selon un deuxième mode de réalisation.
[fig.6] La figure 6 est une représentation schématique écorchée d'une cuve de navire méthanier et d'un terminal de chargement/déchargement de cette cuve.

### Description des modes de réalisation

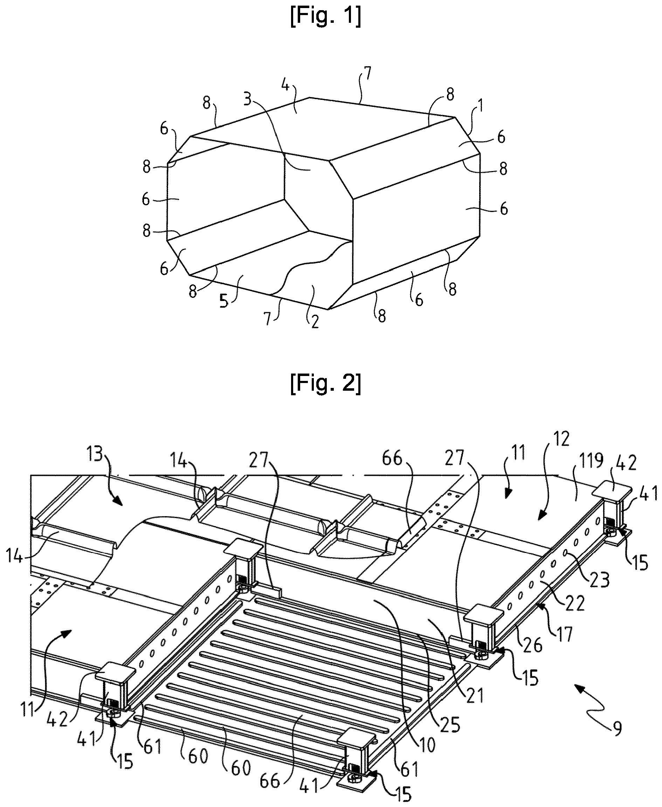

En relation avec la figure 1, l'on observe la partie arrière d'une structure porteuse 1 destinée à recevoir les parois d'une cuve étanche et thermiquement isolante. La structure porteuse 1 est formée par la coque interne d'un navire à double coque. La structure porteuse 1 présente une forme générale polyédrique ou prismatique. La structure porteuse 1 présente une paroi avant 2 et une paroi arrière 3, ici de forme octogonale. Sur la figure 1, la paroi avant 2 n'est représentée que partiellement afin de permettre la visualisation de l'espace interne de la structure porteuse 1. Les parois avant 2 et arrière 3 sont des parois de cofferdam du navire et s'étendent transversalement à la direction longitudinale du navire. La structure porteuse 1 comporte également une paroi supérieure 4, une paroi inférieure 5 et des parois latérales 6. La paroi supérieure 4, la paroi inférieure 5 et les parois latérales 6 s'étendent selon la direction longitudinale du navire, relient les parois avant 2 et arrière 3 au niveau d'arêtes 7, et se rejoignent au niveau d'arêtes 8.

Comme représenté schématiquement sur la figure 2, chaque paroi 9 de la cuve présente successivement, de l'extérieur vers l'intérieur, selon la direction d'épaisseur de la paroi 9, une barrière thermiquement isolante 10 comportant des caissons isolants 11, une membrane étanche 12 reposant sur les caissons isolants de la barrière thermiquement isolante 10. La membrane étanche 12 est destinée à être en contact avec le gaz liquéfié à basse température contenu dans la cuve tel que du gaz de pétrole liquéfié comportant du butane, du propane, du propène ou autre et présentant une température d'équilibre comprise entre -50°C et 0°C. Cette structure multicouche de la cuve peut être disposée sur chacune des parois 2, 3, 4, 5, 6 de la structure porteuse 1.

Par convention, l'adjectif « supérieur » appliqué à un élément de la cuve désigne la partie de cet élément orientée vers l'intérieur de la cuve et l'adjectif « inférieur » désigne la partie de cet élément orientée vers l'extérieur de la cuve, quelle que soit l'orientation de la paroi de cuve par rapport au champ de gravité terrestre. De même, le terme « au-dessus » désigne une position située plus près de l'intérieur de la cuve et le terme « en dessous » une position située plus près de la structure porteuse, quelle que soit l'orientation de la paroi de cuve par rapport au champ de gravité terrestre.

Les caissons isolants forment conjointement une surface plane sur laquelle est ancrée la membrane étanche 12. Ces caissons isolants 11 présentent une forme parallélépipédique rectangle. Ils peuvent prendre par exemple une forme de prisme hexagonal ou de prisme triangulaire. Les caissons isolants 11 sont juxtaposés selon un maillage rectangulaire régulier. Les caissons isolants 11 sont ancrés sur la paroi porteuse par tout moyen adapté, comme par exemple à l'aide d'organes d'ancrage 15. Les caissons isolants 11 reposent sur la paroi porteuse par l'intermédiaire de cordons de mastic 60, 61 formant des lignes parallèles rectilignes. Ces lignes peuvent aussi être ondulées.

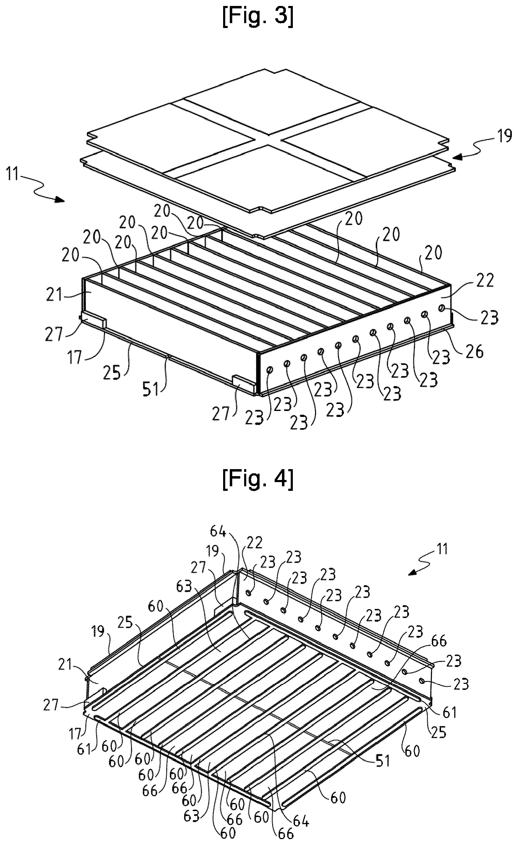

En référence à la figure 3, selon un premier mode de réalisation, le caisson isolant 11 comporte un panneau de fond 17, des panneaux de côté 21, 22 et un panneau de couvercle 19. Tous ces panneaux 17, 21, 22, 19 sont de forme rectangulaire et délimitent un espace interne de caisson isolant 11. Le panneau de fond 17 et le panneau de couvercle 19 se développent parallèlement l'un de l'autre et parallèlement à la paroi porteuse 2, 3, 4, 5, 6. Les panneaux de côté 21, 22 se développent perpendiculairement au panneau de fond 17. Les panneaux de côté 21, 22 relient le panneau de fond 17 et le panneau de couvercle 19 sur toute la périphérie du bloc isolant 11. Les panneaux de côté 21, 22 comprennent deux panneaux de côté longitudinal 21 et deux panneaux de côté transversal 22. Les panneaux de côté transversal 22 se développant perpendiculairement aux panneaux de côté longitudinal 21 comportent des orifices traversant 23. Ces orifices traversant 23 sont destinés à permettre la circulation de gaz dans le caisson isolant 11 et donc dans la barrière thermiquement isolante 10. Lorsque la cuve est chargée, ce gaz peut par exemple être de l'azote.

Des entretoises porteuses 20 sont disposées entre le panneau de fond 17 et le panneau de couvercle 19 dans l'espace interne du bloc isolant 11. Ces entretoises porteuses 20 se développent parallèlement à des panneaux de côté longitudinal 21. Les entretoises porteuses divisent ainsi l'espace interne en une pluralité de compartiments. Chaque entretoise porteuse 20 est placée entre deux orifices traversants 23 consécutifs. Les panneaux et les entretoises porteuses sont attachés par tout moyen approprié, par exemple vis, agrafes ou pointes.

Une garniture calorifuge perméable au gaz est disposée dans le caisson 11. La garniture peut être placée entre chaque entretoise porteuse 20. Cette garniture calorifuge perméable au gaz est de préférence non structurelle, par exemple de la laine de verre, de la ouate de cellulose, de la perlite, des aérogels ou de la silice pyrogénée.

Le panneau de fond 17 comporte des rebords longitudinaux 25 faisant saillie depuis les panneaux de côté longitudinal 21. Le panneau de fond 17 comporte également un rebord transversal 26 faisant saillie d'un des panneaux de côté transversal 22. Des tasseaux 27 sont portés les rebords 25, 26 du panneau de fond 17. Dans l'exemple illustré sur la figure 3, chaque extrémité des rebords longitudinaux 25 porte un tasseau 27 respectif et une portion centrale du rebord transversal 26 porte un tasseau 27.

De nombreuses méthodes peuvent être utilisées pour réaliser le panneau de couvercle 19. Dans le mode de réalisation illustré sur la figure 3, deux plaques de contreplaqué présentant des dimensions différentes sont superposées afin de former le panneau de couvercle 19. Dans un mode de réalisation non illustré, le panneau de couvercle est réalisé par une plaque de contreplaqué dans laquelle un lamage est réalisé.

Comme illustré sur la figure 2, les organes d'ancrage 15 sont disposés aux coins de chaque caisson isolant 11. Les parois latérales de chaque caisson isolant 11 comportent un rebord. Un tasseau 27 est disposé sur chacune des extrémités dudit rebord. Chaque tasseau 27 des caissons isolant 11 coopère avec un organe d'ancrage 15 respectif, un même organe d'appui 15 coopérant avec les tasseaux 27 d'une pluralité caissons isolants 11 adjacents. Les angles des caissons isolants 11 adjacents comportent un dégagement formant conjointement une cheminée au droit d'un organe de fixation 15 correspondant. Cette cheminée permet le vissage d'un écrou sur le goujon de l'organe de fixation 15. Cette cheminée est remplie d'une garniture calorifuge 41 et recouverte d'une plaque d'obturation 42 afin de former une surface plane avec les panneaux de couvercles des caissons isolants.

Les figures 2, 4 et 6 montrent aussi les cordons de mastic 60, 61 sur lesquels reposent le caisson isolant 11. Ces cordons de mastic 60, 61 servent à rattraper les écarts de la paroi porteuse par rapport à une surface plane de référence. De préférence, un papier Kraft (non représenté) est disposé sur la paroi porteuse afin que les boudins de mastic n'adhèrent pas sur la paroi porteuse pour permettre un jeu de glissement du caisson isolant 11 par rapport à la paroi porteuse 2, 3, 4, 5.

Les boudins de mastic 60, 61 comprennent des boudins transversaux 61 et des boudins longitudinaux 60. Les boudins transversaux 61 sont disposés au droit des panneaux de côté transversal 22. Les boudins longitudinaux 60 sont disposés entre les boudins transversaux 61, au droit des panneaux de côté longitudinal 21 et des entretoises porteuses 20.

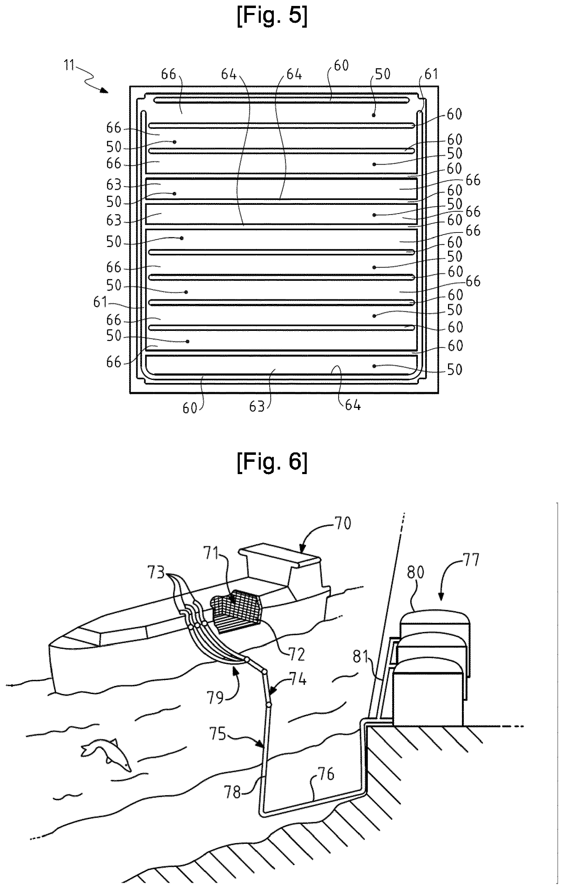

Différentes possibilités existent pour la pose des boudins de mastic 60, 61. De préférence les boudins de mastic 60, 61 sont posés sur une face externe du panneau de fond 17 du caisson isolant 11, avant que le caisson isolant 11 ne soit posé sur la paroi porteuse 2, 3, 4, 5 ou 6 comme visible sur les figures 4 et 5. Alternativement, les boudins de mastic 60, 61 sont posés d'abord sur la paroi porteuse 2, 3, 4, 5 ou 6, avant la pose du caisson isolant 11.

Les boudins de mastic 60, 61 peuvent être disposés de trois manières différentes. Une première manière est de disposer les boudins de mastic 60, 61 sous la forme de contours fermés 64 sur la paroi porteuse 2, 3, 4, 5, 6 ou sur une face externe du panneau de fond 17. Ces contours fermés 64 délimitent sur la paroi porteuse ou sur la face externe du panneau de fond 17 des zones fermées 63, et délimitent des espaces confinés entre la paroi porteuse 2, 3, 4, 5, 6 et le panneau de fond 17 après la pose du caisson isolant 11 sur la paroi porteuse 2, 3, 4, 5, 6. Une deuxième manière est de disposer les boudins de mastic de telle sorte à laisser un interstice entre les boudins de mastic. Ainsi, avant la pose du caisson isolant 11, il n'y a pas de contour fermé 64. Toutefois, là où l'interstice entre les boudins de mastic 60, 61 est petit, ceux-ci définissent des zones 66 susceptibles de se fermer par fluage. Par exemple, une zone 66 existe entre chaque paire de boudins de mastic 60 adjacents. Dans cette seconde manière de disposer les boudins de mastic, l'interstice entre les boudins de mastic 60 et 61 avant pose du caisson isolant 11 est par exemple inférieur ou égal à 12 mm. Une troisième manière est de disposer une partie des boudins de mastic 60, 61 sous la forme de contours fermés et une autre partie en laissant des interstices entre les boudins de mastic 60, 61.

Dans tous les cas, des contours fermés 64 sont susceptibles d'être formés, soit dès la pose des boudins de mastic 60, 61 sur le panneau de fond 17 comme illustré sur les figures 4 et 5 ou sur la paroi porteuse comme illustré sur la figure 2, soit à la suite de l'écrasement des boudins de mastic lors de la pose des caissons isolants 11 sur la paroi porteuse 2, 3, 4, 5 ou 6. En effet, le fluage du mastic lors de la pose du caisson isolant 11 sur la paroi porteuse est susceptible de combler les interstices entre deux boudins de mastic 60, 61 et de conduire à la formation de contours fermés 64. Des contours fermés 64 formés par les boudins de mastic 60, 61 sont représentés à titre illustratif sur les figures 4 et 5. Dans le cas où c'est l'écrasement des boudins de mastic 60, 61 qui produit la formation d'un ou plusieurs contours fermés 64, la position de ces contours fermés 64 n'est pas forcément connue à l'avance. Inversement les contours fermés 64 formés avant la pose des caissons isolants 11 sur la paroi porteuse sont donc connus à l'avance. Dans les deux cas, il est souhaitable de ménager une communication de la phase gazeuse entre l'espace confiné entouré d'un contour fermé 64 et la garniture calorifuge à l'intérieur du caisson isolant. 11.

Afin de permettre la circulation de gaz dans les espaces confinés, notamment pour éviter les différentiels de pression ou des accumulations d'espèces chimiques dangereuses car inflammables et/ou explosives, le panneau de fond 17 comporte au moins un passage traversant 50, 51 reliant une face interne du panneau de fond 17 à la face externe, et débouchant dans les zones fermées 63 ou les zones 66 susceptibles de devenir fermées.

Selon un premier mode de réalisation illustré sur les figures 3 et 4, le passage traversant prend la forme d'une rainure 51. Ainsi la rainure 51 s'étend sur toute la largeur du panneau de fond 17, c'est-à-dire d'un bord à l'autre du panneau de fond 17 et segmente le panneau de fond 17 en deux parties égales. La rainure 51 est disposée de manière à traverser toutes les zones fermées ou susceptibles de de le devenir et donc tous les espaces confinés. Dans un mode de réalisation non illustrée, le caisson isolant comprend en outre une entretoise porteuse transverse se développant parallèlement aux panneaux de côté transversal sur toute la largeur de l'espace interne du caisson. L'entretoise porteuse transverse peut prendre plusieurs formes, par exemple la forme d'un peigne. L'entretoise porteuse transverse est alors positionnée de manière à ne pas recouvrir complètement la rainure. Par exemple, si l'entretoise porteuse transverse est positionnée au milieu du caisson isolant 11, la rainure 51 sera décalée par rapport à cette position. Dans un autre mode de réalisation non illustré, le panneau de fond comprend deux passages traversants qui prennent la forme de deux rainures. Les deux rainures sont disposées de manière à traverser tous les espaces confinés. Dans une variante, chacune des rainures traverse tous les espaces confinés. Elles peuvent être, par exemple, parallèles entre elles.

Selon un deuxième mode de réalisation illustré sur la figure 5, le caisson isolant 11 comprend plusieurs passages traversants prenant la forme de trous 50, par exemple de forme circulaire ou autre. Certains de ces trous débouchent dans les zones fermées et donc dans les espaces confinés. A chaque zone fermée 63 ou chaque zone 66 susceptible de devenir fermée est associée un trou 50. Les trous 50 sont disposés en quinconce dans l'exemple représenté, à savoir alternativement dans la partie droite et la partie gauche des compartiments délimités par les entretoises porteuses 20. Dans un mode de réalisation non illustré, chaque espace confiné est associé au moins deux trous. Cela est particulièrement avantageux notamment lorsque le caisson isolant comprend en outre une entretoise porteuse transverse se développant parallèlement aux panneaux de côté transversal sur toute la largeur de l'espace interne du caisson. L'entretoise porteuse transverse peut prendre plusieurs formes, par exemple la forme d'un peigne. De par sa position, l'entretoise porteuse transverse peut segmenter chaque compartiment du caisson isolant 11. Les deux trous de chaque zone située entre deux boudins de mastic 60 sont alors répartis de chaque côté de ladite entretoise porteuse transverse. Dans un autre mode de réalisation non illustré, un trou est placé de manière à être partiellement traversé par une entretoise et débouche sur deux espaces confinés. Dans un autre mode de réalisation non illustré, chaque zone fermée 63 ou chaque zone 66 susceptible de devenir fermée est associée un trou 50 placé au milieu de la zone ou à un autre endroit, par exemple aléatoirement.

La membrane étanche peut être réalisée de différente manière. Dans l'exemple représenté, la membrane étanche 12 de la paroi 9 de cuve comporte une pluralité de plaques métalliques 13 juxtaposées les unes aux autres avec par exemple recouvrement. Ces plaques métalliques 13 sont de préférence de forme rectangulaire. Les plaques métalliques 13 sont soudées entre elles afin d'assurer l'étanchéité de la membrane étanche 12. De préférence, les plaques métalliques 13 sont réalisées en acier inoxydable, par exemple avec une épaisseur de 1,2mm.

Afin de permettre la déformation de la membrane étanche en réponse aux différentes contraintes subies par la cuve, en particulier en réponse à la contraction thermique résultant du chargement de gaz liquéfié dans la cuve, les plaques métalliques 13 comportent une pluralité d'ondulations 14 orientées vers l'intérieur de la cuve. Plus particulièrement, la membrane étanche12 de la paroi 9 de cuve comporte une première série d'ondulations 14 et une seconde série d'ondulations 14 formant un motif rectangulaire régulier. Comme illustré sur la figure 2, la première série d'ondulations 14 est parallèle à l'arête 8 et la seconde série d'ondulations 14 est perpendiculaire à l'arête 8. De préférence, les ondulations 14 se développent parallèlement aux bords des plaques métalliques rectangulaires. La distance entre deux ondulations 14 successives d'une série d'ondulations est par exemple de l'ordre de 600mm.

La technique décrite ci-dessus pour réaliser une cuve présentant une seule membrane étanche peut aussi être utilisée dans différents types de réservoirs, par exemple pour constituer une cuve à double membrane pour gaz naturel liquéfié (GNL) dans une installation terrestre ou dans un ouvrage flottant comme un navire méthanier ou autre. Dans ce contexte, on peut considérer que la membrane étanche illustrée sur les figures précédentes est une membrane étanche secondaire, et qu'une barrière isolante primaire ainsi qu'une membrane étanche primaire, non représentées, doivent encore être ajoutées sur cette membrane étanche secondaire. De cette manière, cette technique peut également être appliquée aux cuves présentant une pluralité de barrière thermiquement isolante et de membranes étanches superposées.

En référence à la figure 6, une vue écorchée d'un navire méthanier 70 montre une cuve étanche et isolée 71 de forme générale prismatique montée dans la double coque 72 du navire. La cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double-coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GPL depuis ou vers la cuve 71.

La figure 6 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du navire 70 depuis ou vers l'installation à terre 77. Celle-ci comporte des cuves de stockage de gaz liquéfié 80 et des conduites de liaison 81 reliées par la conduite sous-marine 76 au poste de chargement et de déchargement 75. La conduite sous-marine 76 permet le transfert du gaz liquéfié entre le poste de chargement et de déchargement 75 et l'installation à terre 77 sur une grande distance, par exemple 5 km, ce qui permet de garder le navire 70 à grande distance de la côte pendant les opérations de chargement et de déchargement.

Pour engendrer la pression nécessaire au transfert du gaz liquéfié, on met en œuvre des pompes embarquées dans le navire 70 et/ou des pompes équipant l'installation à terre 105 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Cuve étanche et thermiquement isolante de stockage d'un gaz liquéfié à basse température, intégrée dans une structure porteuse (1), ladite cuve comportant une paroi de cuve (9) fixée sur une paroi porteuse (2, 3, 4, 5, 6) de la structure porteuse (1), la paroi de cuve (9) comportant dans le sens de l'épaisseur, de l'extérieur vers l'intérieur de la cuve :
une barrière thermiquement isolante (10) retenue sur la paroi porteuse (2, 3, 4, 5, 6), et une membrane étanche (12) supportée par la barrière thermiquement isolante (10), la barrière thermiquement isolante (10) comportant une pluralité de caissons isolants (11) juxtaposés, un dit caisson isolant (11) comprenant un panneau de couvercle (19) formant une surface de support pour la membrane étanche (12), des panneaux de côté (21, 22) et un panneau de fond (17),
le panneau de fond (17) et le panneau de couvercle (19) se développant parallèlement l'un de l'autre et parallèlement à la paroi porteuse (1, 2, 3, 4, 5, 6), les panneaux de côté (21, 22) reliant le panneau de fond (17) au panneau de couvercle (19) de manière à délimiter un espace interne du caisson isolant (11), l'espace interne étant rempli d'une garniture calorifuge perméable aux gaz, des orifices traversants (23) étant prévus dans les panneaux de côté (21, 22) pour permettre la circulation de gaz entre l'espace interne du caisson isolant (11) et un environnement du caisson isolant (11),
dans laquelle le panneau de fond (17) prend appui sur la paroi porteuse (2, 3, 4, 5, 6), par l'intermédiaire de boudins de mastic (60, 61) disposés entre la paroi porteuse et le panneau de fond (17) pour rattraper des écarts de la paroi porteuse par rapport à une référence plane, les boudins de mastic (60, 61) étant disposés sous la forme d'au moins un contour fermé délimitant au moins un espace confiné entre la paroi porteuse et le panneau de fond (17),
le panneau de fond (17) comportant au moins un passage traversant (50, 51) débouchant dans ledit ou chaque au moins un espace confiné pour permettre la circulation de gaz entre ledit ou chaque au moins un espace confiné et l'espace interne du caisson isolant (11).

2. Cuve selon la revendication 1, dans laquelle les panneaux de côté (21, 22) comportent des panneaux de côté transversal (22) et des panneaux de côté longitudinal (21), les panneaux de côté transversal (22) se développant perpendiculairement aux panneaux de côté longitudinal (23), les panneaux de côté transversal comportant les orifices traversant (23).

3. Cuve selon l'une des revendication 1 à 2, dans laquelle les boudins de mastic (60, 61) comprennent des boudins transversaux (61) et des boudins longitudinaux (60), les boudins transversales (61) étant disposées au droit des panneaux de côté transversal (22), et les boudins longitudinaux (60) étant disposées entre les boudins transversaux (61).

4. Cuve selon la revendication 3, dans laquelle des boudins longitudinaux (60) sont disposées au droit des panneaux de côté longitudinal (21)

5. Cuve selon l'une des revendications 1 à 4, dans laquelle ledit un caisson isolant (11) comporte en outre des entretoises porteuses (20) disposées dans l'espace interne pour diviser l'espace interne en une pluralité de compartiments, les entretoises porteuses (20) se développant parallèlement aux panneaux de côté longitudinal (21), une entretoise porteuse (20) étant placée entre deux orifices traversants (23) consécutifs.

6. Cuve selon la revendication 5, dans laquelle des boudins longitudinaux (60) sont disposés au droit des entretoises porteuses (20).

7. Cuve selon l'une des revendications 1 à 6, dans laquelle le au moins un passage traversant (51) comporte une rainure (51) traversant le ou chaque espace confiné.

8. Cuve selon la revendication 7, dans laquelle la rainure (51) s'étend sur toute une largeur du panneau de fond (17).

9. Cuve selon la revendication 7, dans laquelle la rainure (51) s'étend parallèlement aux panneaux de côté transversal (22) et est disposée de manière à segmenter le panneau de fond (17) en deux parties égales.

10. Cuve selon l'une des revendications 7 à 9, dans laquelle la rainure présente une largeur comprise entre 2 et 12 mm, de préférence entre 4 et 8 mm et idéalement de 5 mm.

11. Cuve selon l'une des revendications 1 à 6, dans laquelle le panneau de fond (17) comprend une pluralité de passages traversants, présentant une forme de trous (50).

12. Cuve selon la revendication 11, dans laquelle au moins un desdits trous (50) débouche dans chaque espace confiné.

13. Cuve selon la revendication 11 ou 12, dans laquelle lesdits trous présentent un diamètre compris entre 15 et 30 mm et de préférence entre 25 et 30 mm.

14. Cuve selon l'une des revendications 1 à 13, dans laquelle la barrière thermiquement isolante (10) est une barrière thermiquement isolante secondaire et la membrane étanche (12) est une membrane étanche secondaire, la paroi de cuve (9) comportant en outre une barrière thermiquement isolante primaire disposée sur la membrane étanche secondaire et une membrane étanche primaire portée par ladite barrière thermiquement isolante primaire.

15. Caisson isolant (11) pour cuve étanche et thermiquement isolante de stockage d'un gaz liquéfié à basse température, ledit caisson isolant comprenant un panneau de couvercle (19), des panneaux de côté (21, 22) et un panneau de fond (17) et présentant une forme générale de parallélépipède rectangle,
le panneau de fond (17) et le panneau de couvercle (19) se développant parallèlement l'un de l'autre, les panneaux de côté (21, 22) reliant le panneau de fond (17) au panneau de couvercle (19) de manière à délimiter un espace interne du caisson isolant (11), l'espace interne étant rempli d'une garniture calorifuge perméable aux gaz,
des orifices traversants (23) étant prévus dans les panneaux de côté (21, 22) pour permettre la circulation d'un gaz dans le caisson isolant (11),
dans lequel des boudins de mastic (60, 61) sont disposés sur une face externe du panneau de fond (19),
les boudins de mastic (60, 61) étant agencés sous la forme d'au moins un contour fermé (64) délimitant au moins une zone fermée (63) sur la face externe, le panneau de fond comportant au moins un passage traversant (50,51) reliant une première face interne à la face externe, et débouchant dans ladite ou chaque au moins une zone fermée (63).

16. Caisson isolant (11) selon la revendication 15, dans lequel le au moins un passage traversant (51) comporte une rainure (51) traversant la ou chaque zone fermée (63).

17. Caisson isolant (11) selon la revendication 15, dans lequel le panneau de fond (17) comprend une pluralité de passages traversants présentant une forme de trous (50).

18. Caisson isolant (11) selon la revendication 17, dans lequel au moins un desdits trous (50) débouche dans chaque surface fermée.

19. Navire (70) pour le transport d'un gaz liquéfié à basse température, le navire comportant une coque (72) et une cuve selon l'une des revendications 1 à 14 disposée dans la coque.

20. Système de transfert pour un gaz liquéfié à basse température, le système comportant un navire (70) selon la revendication 19, des canalisations isolées (73,79, 76, 81) agencées de manière à relier la cuve (71) installée dans la coque du navire à une installation de stockage flottante ou terrestre (77) et une pompe pour entrainer un flux de gaz liquéfié à basse température à travers les canalisations isolées depuis ou vers l'installation de stockage flottante ou terrestre vers ou depuis la cuve du navire.

21. Procédé de chargement ou de déchargement d'un navire (70) selon la revendication 19, dans lequel on achemine un gaz liquéfié à basse température à travers des canalisations isolées (73, 79, 76, 81) depuis ou vers une installation de stockage flottante ou terrestre (77) vers ou depuis la cuve du navire (71).
